**Europäisches Patentamt**

**European Patent Office**

**Office européen des brevets**

(19)

(11) Veröffentlichungsnummer: **0 084 585**
**B1**

(12)

# EUROPÄISCHE PATENTSCHRIFT

(45) Veröffentlichungstag der Patentschrift:
08.05.85

(21) Anmeldenummer: **82100596.4**

(22) Anmeldetag: **27.01.82**

(51) Int. Cl.⁴: **E 02 B 15/04**

---

(54) Ölabsaugevorrichtung in schwimmfähiger Ausführung.

---

(43) Veröffentlichungstag der Anmeldung:
**03.08.83 Patentblatt 83/31**

(45) Bekanntmachung des Hinweises auf die Patenterteilung:
**08.05.85 Patentblatt 85/19**

(84) Benannte Vertragsstaaten:
**AT BE CH DE FR GB IT LI LU NL SE**

(56) Entgegenhaltungen:
**EP - A - 0 011 052**
**GB - A - 1 296 532**
**GB - A - 2 013 583**
**US - A - 3 534 859**
**US - A - 3 753 492**
**US - A - 3 753 497**

(73) Patentinhaber: **Stallzus, Harry,**
**Mecklenburgerstrasse 41, D-2300 Kiel 1 (DE)**

(72) Erfinder: **Stallzus, Harry, Mecklenburgerstrasse 41,**
**D-2300 Kiel 1 (DE)**

(74) Vertreter: **Hansmann, Dierk, Dipl.-Ing., Jessenstrasse 4,**
**D-2000 Hamburg 50 (DE)**

---

Anmerkung Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf eine Vorrichtung zur Beseitigung von Ölverunreinigungen auf Wasseroberflächen, bestehend aus einem ringförmigen Schwimmkörper mit einem Sammelraum für ein Öl-/Wassergemisch, der über eine Vakuumleitung entleerbar ist.

In der Praxis besteht das Problem, daß bei Ölkatastrophen durch Tankerunfälle oder dergleichen eine schnelle Ausbreitung des Öls durch Strömung und Wind erfolgt und sehr schnell küstennahe Gewässer erreicht werden. Die bisher entwickelten Vorrichtungen sind relativ groß und somit unhandlich für den Einsatz. Ferner passen diese Geräte sich schlecht entsprechenden Wellenbewegungen an, wobei zusätzlich Probleme beim Einsatz in flachen Gewässern bestehen und beim Abschöpfen wird überwiegend Wasser aufgenommen.

Es ist bereits nach der US-PS 3 534 859 eine Vorrichtung der gattungsgemäßen Art bekannt geworden, bei der über einen ringförmigen Schwimmkörper und einen außen liegenden Stabilisierungskörper ein Öl-/Wassergemisch über eine Rillenausbildung in das innere umschlossene Zentrum des Schwimmkörpers läuft und hier über einen Trichter mit einem angeschlossenen Unterdrucksystem abgeführt wird. Der Mangel hierbei ist, daß relativ viel Wasser mit abgeführt werden muß.

Weiterhin ist nach der GB-PS 2 013 583 bereits eine schlauchartige Ölsperre mit Durchtrittsöffnungen für ein Öl-/Wassergemisch vorgeschlagen worden, wobei durch einen Schlauch über Pumpen, das in einem Sammelraum anfallende Gemisch abgeführt wird. Auch bei dieser Anordnung muß relativ viel Wasser mit abgeführt werden, da keine zweite Abscheidung erfolgt.

Der Erfindung liegt die Aufgabe zugrunde, eine handliche und wirtschaftliche Vorrichtung der gattungsgemäßen Art zu schaffen, die einen Einsatz vom Schiff, von Land oder in Kombination mit Ölsperren in großen Stückzahlen ermöglicht und einen relativ geringen Wasseranteil des abgeführten Gemisches gewährleistet.

Die Lösung dieser Aufgabe erfolgt erfindungsgemäß dadurch, daß ein äußerer Ring des Schwimmkörpers an seinem Umfang im Bereich des Öl-/Wasserspiegels Aufnahmeöffnungen besitzt und sein Innenraum als Beruhigungsraum für das aufgenommene Gemisch ausgebildet und mit im unteren Bereich liegenden Wasser-Rücklauföffnungen versehen ist, wobei der Innenraum einen weiteren abgeschlossenen Ringraum als Sammelraum besitzt, der im Bereich oberhalb des Öl-/Wasserspiegels Aufnahmeöffnungen besitzt und dieser Ringraum als Ölsammelraum mit einer Vakuumleitung zur Entleerung und als Unterdruckerzeuger verbunden ist.

Hierdurch tritt der Vorteil ein, daß sowohl im äußeren Ring als auch im Ringraum als Sammelraum ein Unterdruck sich einstellt, der einmal das Öl bzw. die Ölschicht durch die entsprechend angeordneten Öffnungen in den Innenraum als Beruhigungsraum förmlich vom Wasser absaugt und zum anderen durch eine sogenannte zweite Stufe in Form des im Innenraum liegenden weiteren Ringraumes mit seinen Öffnungen nochmals eine Wasserabscheidung vornimmt. Das Wasser kann dabei durch Wasser-Rücklauföffnungen im äußeren Ring laufend wieder entweichen. Durch dieses zweistufige Abscheideverfahren der Vorrichtung wird der Wasseranteil des abgeführten Gemisches relativ gering gehalten.

In weiterer Ausgestaltung der Vorrichtung wird zur Verbesserung der Funktionsfähigkeit vorgeschlagen, daß der Schwimmkörper einen zentralen Stabilisator an seiner Unterseite aufweist und an seinem äußeren Rand ein umlaufender Siebkranz als Feststoffschutz angeordnet ist.

Um eine Vergrößerung der Ölfilmdecke zu erzielen, wird vorgeschlagen, daß der Schwimmkörper in einer U-förmigen Auffanganordnung als Ölsammelraum über flexible Verbindungen gehalten ist.

Weiterhin ist vorgesehen, daß die offene Seite der U-förmigen Auffanganordnung mit einem Sieb versehen ist.

Zur vielseitigen Verwendung wird vorgeschlagen, daß die Schenkel der U-förmigen Auffanganordnung zwischen Ölsperren einschaltbar sind.

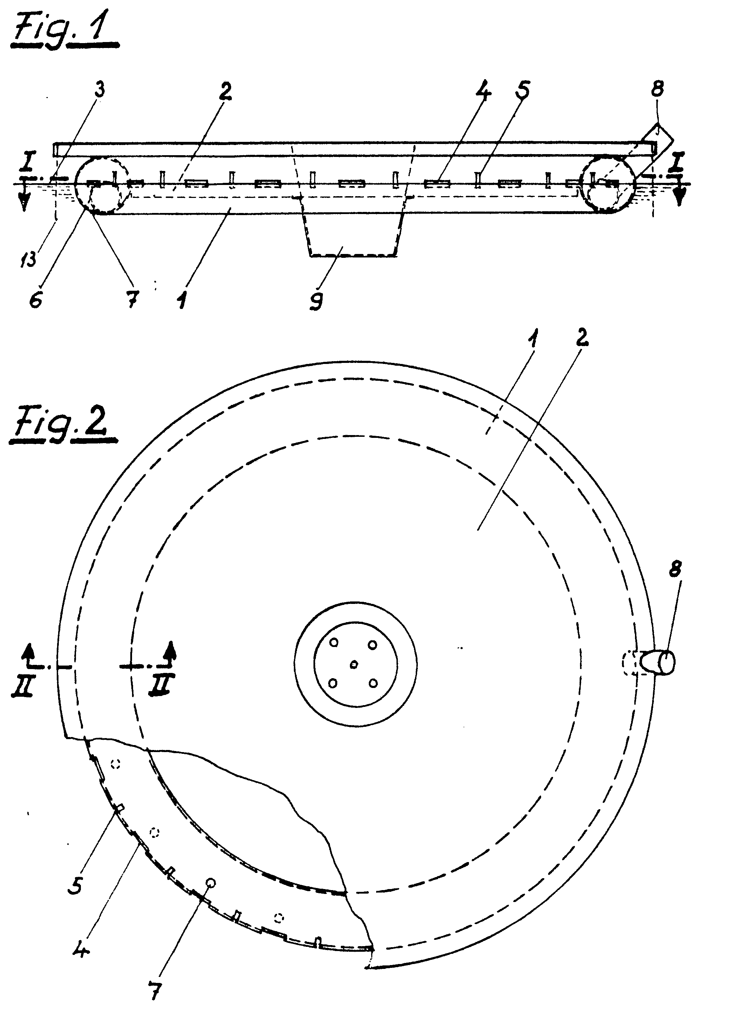

In der Zeichnung sind Ausführungsbeispiele der Erfindung schematisch dargestellt. Es zeigt
Fig. 1 eine Ölabsaugvorrichtung in der Seitenansicht,

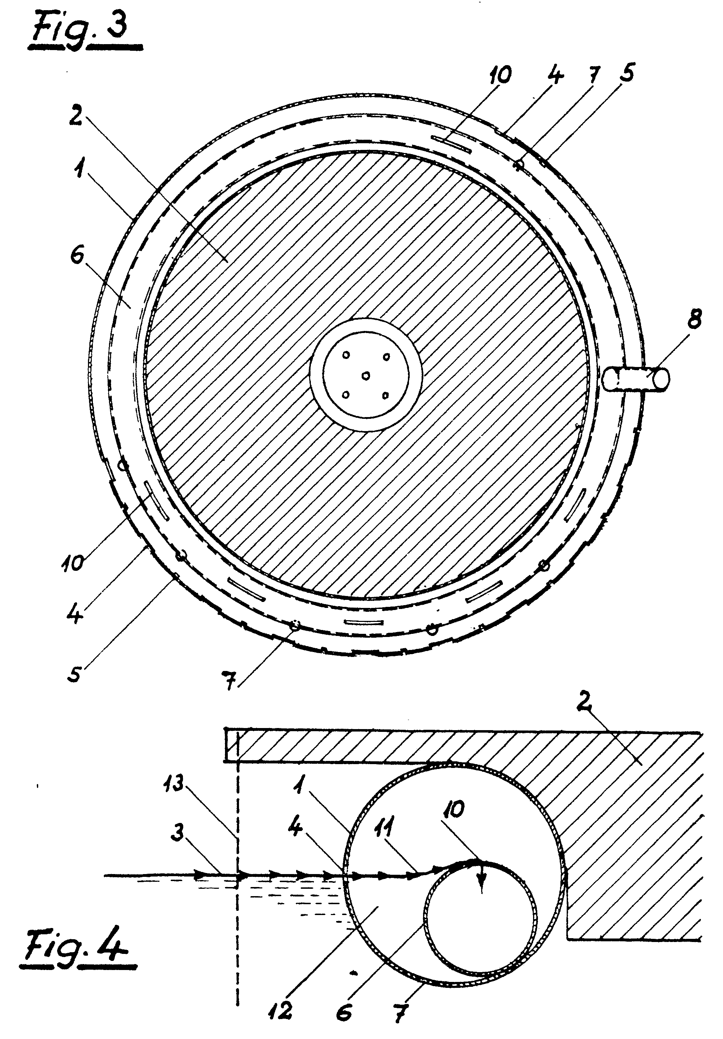

Fig. 2 eine Draufsicht gemäß Fig. 1 mit einem Teilausbruch,
Fig. 3 einen Horizontalschnitt gemäß Linie I-I der Fig. 1,

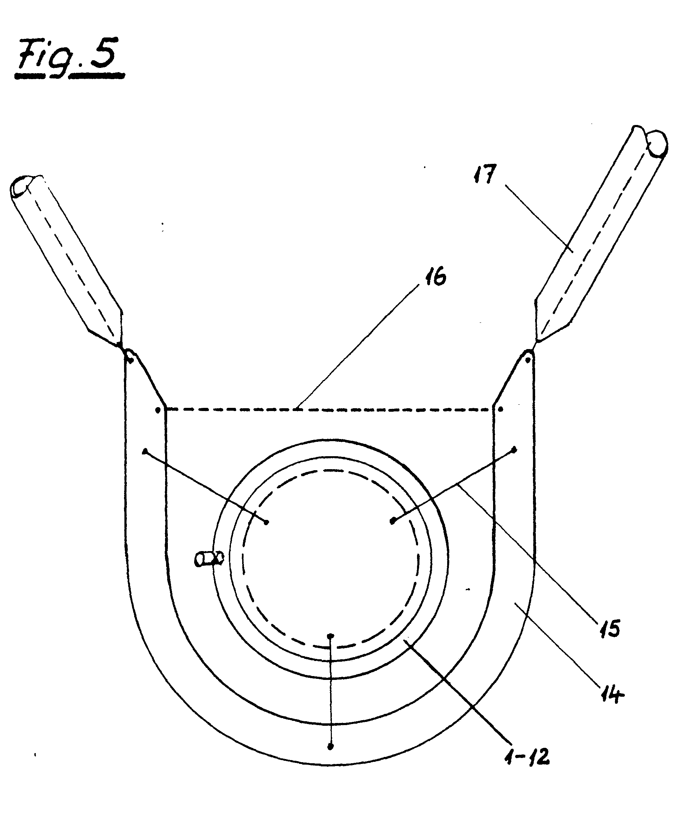

Fig. 4 einen Vertikalschnitt gemäß Linie II-II der Fig. 2,
Fig. 5 eine Draufsicht entsprechend Fig. 2 mit einer U-förmigen Auffanganordnung und Ölsperren

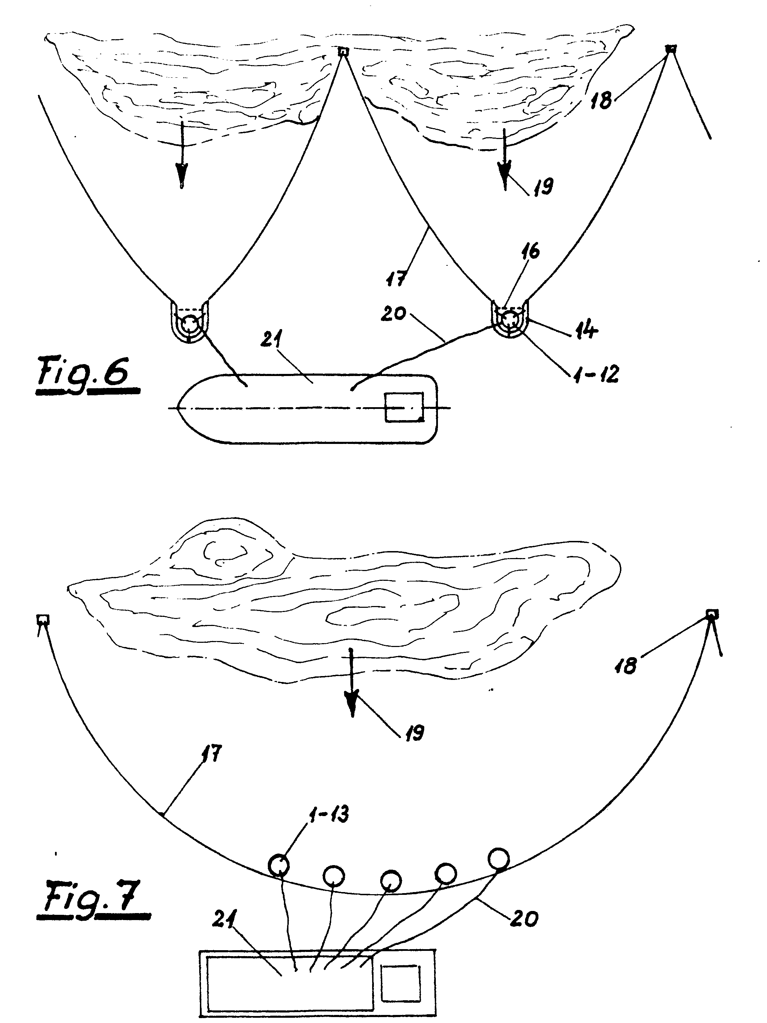

Fig. 6 und 7 Anwendungen in Draufsicht.

Bei der dargestellten Vorrichtung ist an einem Schwimmkörper 2 ein äußerer Ring 1 als Hohlkörper angeordnet, der im Bereich eines Öl-/Wasserspiegels 3 Öffnungen 4, 5 aufweist, durch die ein Ölfilm 11 in einem Innenraum 12 des äußeren Ringes als Beruhigungszone gelangt. Aus diesem Innenraum 12 wird mitgezogenes Wasser durch Rücklauföffnungen 7 im unteren Bereich abgeschieden, während das Öl in leichter Steigung über Öffnungen 10 in einen weiteren Ringraum 6 in Ring 1 gelangt und somit eine zweite Abscheidung möglich ist. Der Ringraum 6 als Sammelraum ist über einen Saugstutzen 8 an eine Vakuumleitung 20 angeschlossen, über die der Ringraum 6 entleerbar ist. Über die Vakuumleitung 20 und dem Saugstutzen 8 ist es auch möglich, daß ein Unterdruck im äußeren Ring 1 und dem Ringraum 6 entsteht und über die zugeordneten Öffnungen 4, 5 bzw. 10 ein Absaugeffekt eintritt.

Zur Verbesserung des Schwimmverhaltens ist an der Unterseite des Schwimmkörpers 2 ein Stabilisator 9 angeordnet. Weiterhin sind die Öffnungen 4, 5 im Einlaßring 1 durch einen Siebkranz 13 vor dem Eindringen von Feststoffen geschützt.

Bei Verwendung von Ölsperren 17 wird der Schwimmkörper 2 durch flexible Verbindungen 15 an eine U-förmige Auffanganordnung 14 befestigt, dessen Schenkel mit über Grundgewichten 18 verankerten Ölsperren 17 verbunden sind. Ein Sieb 16 an der offenen Seite der Anordnung 14 hält die in der Strömung des Ölteppichs 19 befindlichen Feststoffe ab.

Über die am Saugstutzen 8 angeschlossenen Vakuumleitungen 20 gelangt das abgesaugte Öl in Sammelgeräte 21, wie beispielsweise Leichter, Schiff bzw. in Strandnähe zu Tankwagen.

Aus den Funktionsabläufen ist ersichtlich, daß die Ölabsaugvorrichtung allein oder in Kombination mit Ölsperren auch in Küstennähe einsetzbar ist. Das Einholen der Vorrichtungen nach der Ölbergung kann manuell erfolgen. Die Ölabsaugvorrichtungen sind vorteilhaft stapelfähig ausgebildet.

**Patentansprüche**

1. Vorrichtung zur Beseitigung von Ölverunreinigungen auf Wasseroberflächen, bestehend aus einem ringförmigen Schwimmkörper (2) mit einem Sammelraum (12) für ein Öl-/Wassergemisch, der über eine Vakuumleitung (8, 20) entleerbar ist, dadurch gekennzeichnet, daß ein äußerer Ring (1) des Schwimmkörpers (2) an seinem Umfang im Bereich des Öl-/Wasserspiegels (3) Aufnahmeöffnungen (4, 5) besitzt und sein Innenraum (12) als Beruhigungsraum für das aufgenommene Gemisch ausgebildet ist und mit im unteren Bereich liegenden Wasser-Rücklauföffnungen (7) versehen ist, wobei der Innenraum einen weiteren abgeschlossenen Ringraum (6) als Sammelraum besitzt, der im Bereich oberhalb des Öl-/Wasserspiegels (3) Aufnahmeöffnungen (10) besitzt und dieser Ringraum (6) als Ölsammelraum mit einer Vakuumleitung (8, 20) zur Entleerung und als Unterdruckerzeuger verbunden ist.

2. Vorrichtung nach Anspruch 1, dadurch gekennzeichnet, daß der Schwimmkörper (2) einen zentralen Stabilisator (9) an seiner Unterseite aufweist und an seinem äußeren Rand ein umlaufender Siebkranz (13) als Feststoffschutz angeordnet ist.

3. Vorrichtung nach Anspruch 1 oder 2, dadurch gekennzeichnet, daß der Schwimmkörper (2) in einer U-förmigen Auffanganordnung (14) als Ölsammelraum über flexible Verbindungen (15) gehalten ist.

4. Vorrichtung nach Anspruch 3, dadurch gekennzeichnet, daß die offene Seite der U-förmigen Auffanganordnung (14) mit einem Sieb (16) versehen ist.

5. Vorrichtung nach Anspruch 3 oder 4, dadurch gekennzeichnet, daß die Schenkel der U-förmigen Auffanganordnung (14) zwischen Ölsperren (17) einschaltbar sind.

**Claims**

1. A floating oil skimmer for removing oil contaminations from water surfaces, comprising an annular floating body (2) having a collecting chamber (12) for an oil/water mixture which can be emptied via a vacuum line (8, 20), characterized in that an outer ring (1) of the floating body (2) has at its circumference in the region of the oil/water level (3) receiving openings (4, 5) and its inner space (12) constructed as a stilling room for the mixture contained therein and is provided in its lower region with water return openings (7), the inner space having a further closed annular space (6) forming a collecting chamber which in the region above the oil/water level (3) possesses receiving openings (10), this annular space (6) being connected as an oil collecting chamber with a vacuum line (8, 20) serving for emptying and as a low-pressure producer.

2. A floating oil skimmer as claimed in claim 1, characterized in that the floating body (2) has a central stabilizer (9) at its bottom side and a circular screening frame (13) at its outer edge, the circular screening frame serving as a protection against solids.

3. A floating oil skimmer as claimed in claim 1 or 2, characterized in that the floating body (2) is held as an oil collecting chamber in a U-shaped collecting arrangement (14), via flexible connections (15).

4. A floating oil skimmer as claimed in claim 3, characterized in that the open side of the U-shaped collecting arrangement (14) is provided with a screen (16).

5. A floating oil skimmer as claimed in claim 3 or 4, characterized in that the legs of the U-shaped collecting arrangement (14) can be interposed between oil barriers (17).

**Revendications**

1. Dispositif d'écumage flottant destiné à l'enlèvement d'encrassements d'huile se trouvant à la surface des eaux, qui se compose d'un élément flottant annulaire (2) auquel est adjointe une chambre collectrice (12) pour un mélange huile-eau, qui peut être vidée par un conduit sous dépression (8, 20), le dispositif étant caractérisé en ce qu'un anneau externe (1) de l'élément flottant (2) présente des ouvertures de réception (4, 5) à la périphérie, dans la zone du niveau huile-eau (3), en ce que la chambre interne (12) est prévue de telle sorte qu'elle serve de chambre d'accalmie ou mise au repos pour le mélange reçu et en ce qu'elle présente des ouvertures (7) de retour d'eau qui se trouvent dans la zone inférieure, la chambre interne comportant comme chambre collectrice un autre espace annulaire fermé (6), qui présente des ouvertures de réception (10) dans la zone située au-dessus du niveau huile-eau, et cette chambre annulaire (6), en tant que chambre collectrice d'huile, étant raliée à un conduit sous dépression (8, 20) destiné à servir au vidage et à servir de générateur de dépression.

2. Dispositif suivant la revendication 1, caractérisé en ce que l'élément flottant (2) comporte un stabilisateur central (9) à la face inférieure et en ce qu'à son bord externe, il est prévu une couronne de tamisage tournante (13) destinée à servir de protection des matières solides.

3. Dispositif suivant l'une ou l'autre des revendications 1 et 2, caractérisé en ce que l'élément flottant (2) est maintenu dans un dispositif récepteur de section en forme de U (14), en tant que chambre collectrice d'huile, par l'intermédiaire de liaisons flexibles (15).

4. Dispositif suivant la revendication 3, caractérisé en ce que le côté ouvert du dispositif récepteur de section en forme de U (14) est muni d'un tamis (16).

5. Dispositif suivant l'une ou l'autre des revendications 3 et 4, caractérisé en ce que les branches du dispositif récepteur de section en forme de U (14) peuvent être montées entre des barrières d'huile (17).

## Fig.1

## Fig.2

Fig. 3

Fig. 4

0 084 585

*Fig.5*

_Fig.6_

_Fig.7_